# EUROPÄISCHE PATENTSCHRIFT

(11) **EP 3 658 813 B1**
(45) Veröffentlichungstag und Bekanntmachung des Hinweises auf die Patenterteilung: **08.01.2025**
(21) Anmeldenummer: 18759034.4
(22) Anmeldetag: 25.07.2018
(51) Int. Cl.: F16L 57/04, F16L 59/14, F16L 59/18, F17D 5/02, G01M 3/00, A62C 35/00, F16L 59/16, F16L 23/00, F16L 55/168, F16L 55/17

(54) **ROHRANORDNUNG, BESTEHEND AUS EINER ROHRVERBINDUNG**
PIPE ARRANGEMENT CONSISTING OF A PIPE JOINT
AGENCEMENT DE TUYAUX CONSTITUÉ D'UN RACCORD DE TUYAU

(30) Priorität: 25.07.2017 DE 102017116850
(43) Veröffentlichungstag der Anmeldung: 03.06.2020
(73) Patentinhaber: Minimax Viking Patent Management GmbH, 23840 Bad Oldesloe (DE)
(72) Erfinder: KNISPEL, Jan-Simon, 29640 Schneverdingen (DE); GIESEKE, Thorsten, 22927 Großhansdorf (DE); DIEDERLEY, Hanjo, 23669 Timmendorfer Strand (DE)
(74) Vertreter: Eisenführ Speiser
(86) Internationale Anmeldenummer: PCT/EP2018/070233
(87) Internationale Veröffentlichungsnummer: WO 2019/020719

(56) Entgegenhaltungen:
- EP-A2- 0 748 934
- WO-A1-2012/009742
- WO-A2-2008/086508
- DE-A1- 102014 100 155
- DE-A1- 3 814 779
- DE-U1- 20 116 488
- FR-A1- 2 209 912
- FR-A1- 2 311 249
- GB-A- 1 219 768
- GB-A- 2 509 834
- US-A- 3 565 116

## Beschreibung

Die Erfindung betrifft eine Rohranordnung, wobei die Anordnung aus einer Rohrverbindung besteht. Die Rohrverbindung ist als ein Rohr zu verstehen, welches aus zwei Rohrabschnitten gebildet wird, wobei diese Rohrabschnitte (Rohrenden) miteinander fixiert sind, mittels einer mechanischen Verbindung (z.B: einer Muffe, Kupplung).

Insbesondere betrifft die vorliegende Erfindung eine solche Rohranordnung, welche in einer Brandbekämpfungsanlage zum Einsatz kommt, z.B. einer Brandbekämpfungsanlage bzw. Brandbekämpfungseinrichtung z.B. vom Typ einer Sprinkleranlage, Sprühwasseranlage, Trockenlöschanlage, Löschanlage, Hydrantenanlage, Gaslöschanlage oder dergleichen.

Besonders betrifft die Erfindung dabei solche Brandbekämpfungsanlagen mit einer erfindungsgemäßen Rohranordnung, welche in Produktionsstätten, z.B. Lebensmittelproduktionsstätten, Kantinen, Küchen, Krankenhäusern usw. angeordnet ist, also in Gebäuden und Einrichtungen, bei denen auf Grund der Hygienevorschriften in wiederkehrenden Abständen auch eine Reinigung der gesamten Gebäuderäume erfolgen muss und dabei auch die Einrichtungen der Brandbekämpfungsanlage, also z.B. auch die Rohre, Verbindungen, T-Stücke, Rohrbögen, etc. wiederkehrend mit Reinigungsmitteln in unmittelbaren Kontakt kommen.

Unter einer Rohrverbindung wird in der vorliegenden Anmeldung eine Verbindung von wenigstens zwei Rohren mit ihren jeweiligen Rohrenden verstanden, die so zueinander angeordnet sind, dass ein Medium, sei es eine Flüssigkeit, ein Gas oder dergleichen, vom Rohr aufgenommen und/oder durch das verbundene Rohr transportiert werden kann und wobei die Rohrverbindung einerseits gewährleistet, dass die Verbindung mechanisch stabil ausgeführt ist und andererseits auch die Rohrverbindung selbst und somit die Rohrverbindung das Rohr an seiner Verbindung selber dicht ist und somit ein Austritt des im Rohr befindlichen Mediums an der Verbindungsstelle ausgeschlossen ist.

Solche Rohrverbindungen gibt es in verschiedenen Ausführungen. So ist es bekannt, zwei Rohre über ihre Rohrenden mittels Muffen, Fittings oder Kupplungen mechanisch zu verbinden, oder auch dann, wenn die Rohrenden ein Gewinde aufweisen, diese dann mittels einer Schraubenmutter, zu verbinden. Eine solche Lösung ist beispielsweise aus WO 2008/086508 bekannt. Ferner wird als weiterer Stand der Technik hingewiesen auf GB 1 219 768, FR 2.209.912, DE 38 14 779 A1, GB 2509834 A, FR 2 311 249, EP 0 748 934 A2, EP 0 748 934 A3, WO 2012/009742 A1 und DE 10 2014 100 155 A1.

Insbesondere aus GB 1 219 768 ist dabei bekannt, ein Rohr mit einem Schrumpfschlauch zu umhüllen und diesen Schrumpfschlauch mit dem Rohr zu verschrumpfen.

Dabei ist auch bekannt, dass die jeweiligen mechanischen Verbindungsmittel wie Muffen, Kupplungen, Fittings, Schrauben etc. mit Dichtungen versehen sind, z. B. Gummiringen, Gummilippen oder dergleichen, um einen Austritt des im Rohr befindlichen Mediums an der Verbindungsstelle zu verhindern.

Als bekanntes System wird beispielhaft auf das System MINIMAX "PicoFix" hingewiesen. Bei dieser bekannten Kupplung weisen die Rohrformstücke (Rohrenden) eine umlaufende Nut auf. Dabei gibt es Ausführungen mit starren Kupplungen, bei welchen eine Verzahnung und ein spezielles Schrägsitzdesign für den sicheren Halt von zwei Halbschalen (aus Metall) auf den zu verbindenden Rohrenden liegen und mit einem Dichtungsring über beide Rohrenden nach außen hin gut abgedichtet sind. Es gibt auch eine flexibel genutete Ausführung, die den Vorteil hat, Expansion und Längenänderung in Folge thermischer Einwirkungen auszugleichen.

Die verwendeten Dichtungen haben dabei nicht nur die Funktion, einen Austritt des im Rohr befindlichen Mediums nach draußen zu verhindern, sondern dienen auch dazu, dass von außerhalb des Rohrs keine Partikel, Medien (z. B. Chemikalien, Luft, Wasser), Umwelteinflüsse, oder dergleichen in das Innere des Rohrs gelangen.

Die Rohrenden von Rohrabschnitten werden mittels Rohrverbindungen miteinander verbunden, damit somit aus einzelnen Rohrabschnitten lange Rohre gebildet werden können, welche beispielsweise in Brandbekämpfungsanlagen, Brandlöschanlagen, Sprinkleranlagen, Wasserleitungen, Gasleitungen installiert werden. Dabei bilden die Mittel für die mechanische Fixierung/Verbindung der Rohrenden regelmäßig Angriffspunkte, an denen sich Staub, Unrat, Feuchtigkeit oder dergleichen (Umweltrückstände) absetzen kann, zumal durch die mechanischen Verbindungsstücke auch regelmäßig Vorsprünge, Hinterschneidungen und nur zum Teil geschlossene Räume, etc. gebildet werden, an/in denen sich Staub, Unrat, Medien usw. leicht ablagern kann. Auch ist nicht ausgeschlossen, dass die vorgesehene Dichtung durch die Atmosphäre (vor allem durch den Luftsauerstoff) selbst oder in Verbindung einer Reaktion des Unrats mit der Atmosphäre oder mit Wasser (z. B. Spritzwasser, Reinigungsmittel, usw.) oder mit irgendeinem auf die Rohrverbindung fallenden/abgelagerten oder mit diesen in Kontakt kommenden Medium, z. B. Säure oder dergleichen, altern, degradieren bzw. ihre Dichtfunktion verlieren.

Insbesondere dann, wenn die Rohrleitungssysteme, Rohranordnungen und damit die Rohre, Rohrenden und Rohrverbindungen über einen sehr langen Zeitraum ihre Funktion behalten müssen, z. B. über einen Zeitraum von mehreren Jahren oder Jahrzehnten, kann es im Übrigen auch dazu kommen, dass die Teile der Rohrverbindung selbst durch äußere Atmosphären, sei es Luft oder Wasser oder sonstige äußere Einflüsse (dies könnten auch aggressive Atmosphären sein) wie z. B. Stoffe, die mit der Rohrverbindung in Berührung kommen, beschädigt wurden auch z. B. Reinigungsmittel, die für das regelmäßige Reinigen verwendet werden. Dies kann zur Folge haben, dass die Rohrverbindungen (und/oder wie erwähnt die Dichtung) selbst durch Korrosion oder dergleichen Schaden nehmen und somit die mechanisch sichere Verbindung der Rohrenden nicht mehr vollständig gewährleisten werden können, als auch nicht mehr für die notwendige Dichtigkeit gesorgt werden kann.

Dabei ist es bekannt, dass bei Rohrverbindungen z. B. teure Edelstahlmuffen, Edelstahlkupplungen oder dergleichen verwendet werden, auch ist es bereits bekannt, teure Spezialdichtungen einzusetzen, oder auch die gesamten Rohrverbindungen mit einer teuren Sonderlackierung zu versehen.

Das Dokument DE 201 16 488 U1 zeigt eine Anordnung eines Klemmelementes wie bspw. eines Klemmring auf einem vorzugsweise flexiblen Rohrelement wie bspw. einem Schlauch, insbesondere zum Befestigen auf einem in das Rohrelement einbringbaren Gegenstück, wobei das Klemmelement auf dem Rohrelement mittels eines Fixierelementes lagefixierbar ist, wobei das Fixierelement ein Schrumpfschlauch oder ein Abschnitt eines solchen ist.

Die genannten Lösungen sind aber relativ aufwändig und teuer oder ihre Anbringung sehr umständlich, wie es insbesondere bei Lackierungen, Sonderbeschichtungen, oder dergleichen der Fall ist.

Aufgabe der vorliegenden Erfindung ist es, die aufgezeigten Nachteile zu vermeiden und die Rohranordnung zu verbessern, zuverlässiger zu gestalten, insbesondere besser zu schützen gegen Umwelteinflüsse, Reinigungsdetergenzien, usw. und somit eine verbesserte Lebensdauer und Dichtigkeit der Rohranordnung, insbesondere Rohrverbindung zu gewährleisten.

Die Aufgabe wird erfindungsgemäß durch eine Rohranordnung mit den Merkmalen nach Anspruch 1 gelöst. Vorteilhafte Weiterbildungen sind in diesen Unteransprüchen gelöst.

Gegenstand der Erfindung ist somit eine Rohranordnung gemäß Anspruch 1.

Bei einer ersten erfindungsgemäßen Variante wird über die Rohrenden und ihr mechanisches Verbindungsmittel, z. B. Muffen, Fittings, Kupplung, Schraube oder dergleichen, ein verformbarer Hohlkörper gestülpt, welcher nach Verformung und damit Annahme seiner endgültigen Verformung, die Rohrenden und ihr mechanisches Verbindungsmittel eng bzw. formschlüssig und dichtend umschließt.

Dies hat den Vorteil, dass damit die gesamte Rohrverbindung gegenüber der Außenwelt sicher abgeschlossen ist und somit die mechanischen Teile der Rohrverbindung als auch die Dichtung gegenüber der Atmosphäre und äußeren Einflüssen auf die Rohrverbindung sicher geschützt sind.

Der verformbare Hohlkörper ist durch eine thermische Behandlung verformbar oder chemisch verformbar.

Dabei kann es sich um eine Ausführung eines Schrumpfschlauchs handeln, oder um einen Hohlkörper, welcher aus einer nachträglichen Umwicklung mit Schrumpfeigenschaften und optional auch Selbstverschweißungseigenschaften durch Anlegen einer Manschette aus Schrumpfschlauchmaterial um die Rohrverbindung hergestellt wird.

Dadurch, dass der verformbare Hohlkörper nach seiner Verformung die Rohrverbindung eng umschließt, weist die Außenoberfläche der Rohrverbindung praktisch durchgehend nur noch glatte Flächen aus, auf denen sich kaum mehr Staub, Unrat, Medien (z. B. Wasser. Chemikalien, usw.) oder dergleichen in großen Mengen ablagern kann.

Geschieht dies dennoch, so kann Staub, Unrat, oder die entsprechende Ablagerung auch mittels üblicher Reinigungsmittel z. B. auch Hochdruckreiniger entfernt werden, ohne dass dann dabei die mechanische Rohrverbindung wie auch die Rohrdichtung Schaden nehmen, weil sie durch den umschließenden Hohlkörper entsprechend geschützt sind.

In einer weiteren Ausführungsform kann der Hohlkörper innenseitig auch eine zusätzliche Abdichtmasse enthalten, sodass für eine zusätzliche Abdichtung zwischen Rohr und Hohlkörper gesorgt ist und das Eindringen von Medien von außen Richtung der Rohrverbindung bzw. der Rohrabdichtung weiter erschwert oder unmöglich gemacht wird. Die Abdichtmasse, z. B. Kleber, Heißkleber, etc. kann auch vor dem Anbringen des Hohlkörpers auf die Rohrenden, Rohrverbindung voll- oder teilflächig auf das Hohlkörpermaterial innenseitig aufgebracht werden.

Schließlich ist auch möglich, dass der verformbare Hohlkörper nachträglich an eine bestehende Rohrverbindung angebracht wird, d. h. es können bestehende Rohrverbindungen somit durch Nachrüstung noch einen zusätzlichen sicheren Schutz erhalten.

Ferner ist es auch möglich, dass bei der Anbringung des Hohlkörpers an der Rohrverbindung auch Mittel für eine Leckageüberwachung mit angebracht werden, dies kann zum Beispiel ein Feuchtigkeitssensor sein, welcher dann zwischen dem verformten Hohlkörper und der Rohrverbindung liegt und von welchem dann im Falle eines Feuchtigkeitsaustritts an der Rohrverbindung entsprechend ein Signal erzeugt und z. B. an eine Empfangseinrichtung übertragen werden kann, damit insoweit eine Wartung der Rohrverbindung ausgelöst werden kann.

Schließlich ist es auch möglich, dass der Hohlkörper einen aktiven oder passiven Feuchtigkeitsindikator aufnimmt, welcher im Falle eines Feuchtigkeitsaustritts an dem Rohr dies anzeigt und vom Wartungspersonal auch erkannt werden kann.

Die Erfindung ist nachfolgend anhand von Ausführungsbeispielen erläutert.

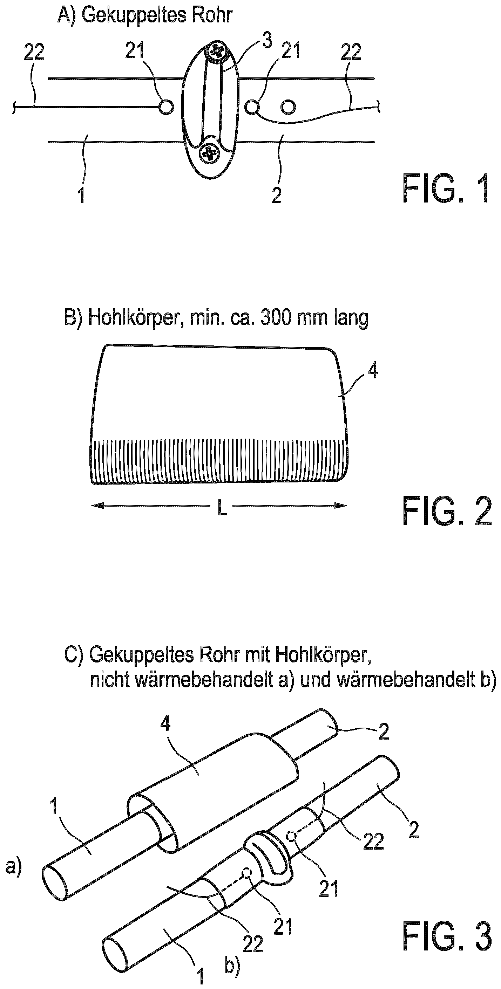

Figur 1 zeigt eine Verbindung von zwei Rohren bzw. Rohrenden 1 und 2, die im dargestellten Beispiel stumpf aufeinander gesetzt sind, oder auf andersartige Weise sich gegenüber liegen. Die beiden Rohrenden sind mit einer mechanischen Verbindung 3 versehen, welche im dargestellten Beispiel als Kupplung ausgeführt ist, wobei jede andere mechanische Verbindung ebenfalls in Frage kommt, z. B. Muffe, Fittings, Schraube oder dergleichen.

Die Rohrkupplung 3 besteht dabei im Wesentlichen aus zwei sich gegenüberliegenden halbschalförmigen Segmenten, z. B. aus Metall, Kunststoff oder dergleichen, die miteinander verbunden sind, z. B. mittels Schrauben, Nieten oder dergleichen.

In Figur 1 ist auch zu erkennen (beispielhafte Darstellung), dass auf einer bzw. beider Seiten der Kupplung ein Feuchtigkeitssensor 21 platziert ist, welcher über eine Kabelverbindung 22 verfügt. Die mit dem Feuchtigkeitssensor 21 gemessenen Feuchtigkeitswerte können über das Kabel 22 an einer Auswertung, z.B. an Rechner, Computer, etc. weitergeleitet und dort verarbeitet werden um beispielsweise auch eine entsprechende Feuchtigkeitsanzeige an einer Anzeigeeinrichtung zu bewerkstelligen.

Figur 2 zeigt in der Aufsicht den verformbaren Hohlkörper 4, z. B. mit einer Länge L von ca. 30 cm. Bei dieser Art von Hohlkörper handelt es sich im dargestellten Beispiel um einen Schrumpfschlauch 4.

Figur 3a zeigt, wie dieser noch unverformte Schrumpfschlauch 4 über die Rohrenden 1 und 2 sowie die mechanische Verbindung beider Rohrenden gebracht wird und diese umhüllt bzw. überdeckt.

Figur 3b zeigt dann nach der Verformung des Schrumpfschlauchs 4, wie sich dieser über die Rohrenden 1 und 2 und die mechanische Verbindung 3 legt, eng umschließt und somit anschmiegt.

Ist der verformbare Hohlkörper 4 ein üblicher Schrumpfschlauch, so erfolgt das Schrumpfen durch thermische Behandlung, z. B. durch Blasen von heißer Luft von außen auf den Schrumpfschlauch 4. Da Rohre in Bekämpfungsanlagen regelmäßig einen relativ großen Durchmesser haben, d.h. z.B. einen Durchmesser von 1 Zoll oder auch mehr (auch bis zu 12 Zoll Durchmesser), vorzugsweise 1 bis 5 Zoll, sollte bei der thermischen Behandlung darauf geachtet werden, dass die für den Schrumpfungsprozess notwendige Wärme möglichst gleichmäßig von allen Seiten auf das Schrumpfschlauchmaterial einwirkt, um somit über den gesamten Radius des Schrumpfschlauches einen gleichmäßigen Schrumpfungsprozess zu ermöglichen. Ein solches gleichmäßige Schrumpfungsergebnis kann z.B. dadurch gewährleistet sein, indem bei der thermischen Behandlung die Wärme von allen Seiten gleichzeitig auf den Schrumpfschlauch einwirkt. Das ist z.B. durch mehrere Heißluftgeräte möglich, die von verschiedenen Seiten gleichzeitig ihre heiße Luft auf den Schrumpfschlauch einwirken lassen.

Wie auch in Figur 3b zu erkennen ist, sind nunmehr die Rohrenden 1, 2 wie auch die mechanische Verbindung 3, also z. B. die Rohrkupplung vollständig vom Hohlkörper 4, also Schrumpfschlauch, umschlossen und dieser bildet dann eine weitere Barriere für die Au-ßenatmosphäre gegenüber dem Inneren des Rohrs, indem sich beispielsweise ein flüssiges oder gasförmiges Medium befinden kann.

Wie in Figur 3b zu erkennen, liegen die Feuchtigkeitssensoren 21 unterhalb des Schrumpfschlauchs, die herausgeführten Kabel 22 werden, wie erwähnt, so verwendet, die vom Feuchtigkeitssensor gemessenen Signale an die Auswertung weiterzuleiten.

Somit kann mithin der Feuchtigkeitssensor 21 auftretende Feuchtigkeit zwischen Hohlkörper und Rohr messen, weil beispielsweise der Schrumpfschlauch undicht geworden ist aufgrund der Einwirkung von Reinigungsdetergenzien, Behandlung mit Hochdruckreinigern, etc. Dies kann entsprechend angezeigt werden, um entweder eine neue Umhüllung der Rohrverbindung mittels des Hohlkörpers zu veranlassen oder gar den gesamten Rohrabschnitt einschließlich der Rohrverbindung auszutauschen.

Zwischen den beiden Rohrenden 1 und 2 und der Kupplung 3 ist ferner auch eine übliche, bekannte Dichtung ausgebildet, die im dargestellten Beispiel jedoch nicht zu erkennen ist.

Diese Dichtung schützt einerseits davor, dass das im Rohr befindliche Medium nach außen austreten kann und andererseits schützt diese Dichtung auch vor dem Einwirken von äu-ßeren Einflüssen von außen vom Rohr in das Innere des Rohrs.

Wenn solche Rohrleitungen für eine lange Dauer, z. B. einige Jahrzehnte, ausgelegt sind, ist es nicht unüblich, dass die Dichtungen einen Schaden erleiden, z. B. durch Alterung, vor allem aber auch durch äußere Einflüsse. Eine typische Alterungserscheinung ist dabei, dass z. B. eine Gummidichtung mit der Zeit spröde wird und somit auch undicht wird.

Diese Bildung der Sprödigkeit der Dichtung hat nicht nur mit dem zeitlichen Alter der Dichtung etwas zu tun, sondern vor allem damit, dass die Außenatmosphäre, also die Atmosphäre außerhalb der Rohrverbindung, auf die Dichtung einwirkt und diese z. B. austrocknet, degradiert etc.. Dieser Alterungsprozess der Dichtung wird unter Umständen aber auch gefördert, wenn das Rohr von außen gereinigt wird, z. B mit aggressiven Reinigungsmitteln oder mit Hochdruckreinigern oder beides zusammen. Dabei ist es nicht zu verhindern, dass dann die Reinigungsflüssigkeit zum Teil auch unter hohen Druck an die Dichtung gelangt und dieses quasi abrasiv abträgt.

Bei der in Figur 3b dargestellten Lösung kann das Reinigungsmittel als solches, auch dann, wenn es durch eine Hochdruckreinigung ausgetragen wird, nicht mehr an die Kupplung selbst bzw. deren Dichtung gelangen, weil der Schrumpfschlauch 4, also der verformbare Hohlkörper, eine weitere mechanische Barriere bildet.

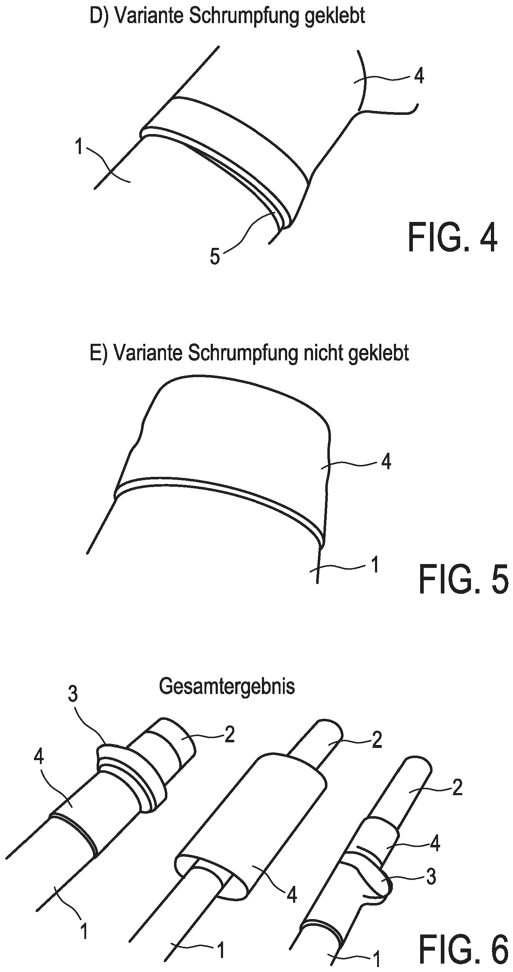

In Figur 4 ist eine weitere erfindungsgemäße Variante gezeigt. Dabei ist vor der Verformung des Hohlkörpers, also z. B. des Schrumpfschlauchs, ein Kleber oder ein anderes Abdichtmittel 5, um den Umfang des Rohrendes angebracht, sodass nach der Verformung des Hohlkörpers dieser mit dem Rohrende zusätzlich durch das Abdichtmittel abgedichtet wird, unter Umständen auch fest verklebt ist, was nochmals das Eindringen von Substanzen, Stoffen, etc. von außen in Richtung der Rohrverbindung, Rohrkupplung und Rohrabdichtung erschwert bzw. verhindert.

Es ist auch möglich, dass das Abdichtmittel als Heißkleber ausgebildet ist, welcher als Schicht bzw. Film auf die Innenseite des noch unverformten Schrumpfschlauchs voll- oder teilflächig aufgetragen ist. Bei der Einwirkung der Wärme auf den Schrumpfschlauch schmilzt dann der Heißkleber und wenn dieser Schrumpfschlauch sich um die Rohrenden und die Rohrverbindung legt und kommt es zur bestmöglichen Verbindung zwischen Rohrenden/Rohrverbindung und dem Schrumpfschlauch und dann kann nach dem Schrumpfprozess die Abdichtmasse, Kleber in einer vorbestimmten Art und Weise reagieren, aushärten oder dergleichen. Somit kann der Schrumpfschlauch fest um die Rohrenden bzw. Rohrverbindungen kleben bzw. abdichten.

Figur 5 zeigt, wie der verformbare Hohlkörper ohne Abdichtmasse um das Rohrende gelegt ist, wobei sich durch die Verformung des Hohlkörpers, insbesondere wenn es sich um ein Schrumpfschlauch handelt, welcher thermisch oder chemisch geschrumpft wird, dieser eng und lückenfrei auf der Oberfläche des Rohrendes ablegt und somit eine hochwirksame Abdichtung darstellt. Ist das Rohrende von außen mit einer Lackierung oder Oberflächenbehandlung versehen, welche möglichst glatt ist, kann die Verbindung durch den verformbaren Hohlkörper noch besser, vor allem dichter und somit dauerhafter sein.

Ob letztlich ein Abdichtmittel, Klebmasse oder dergleichen, wie gemäß Figur 4 zum Einsatz kommt, oder der verformbare Hohlkörper ohne zusätzliche Abdichtmittel auf den Rohrenden verschrumpft wird, hängt von den jeweiligen Gegebenheiten vor Ort ab.

Dadurch, dass erfindungsgemäß nicht nur die Rohre bzw. Rohrenden, sondern vor allem auch die mechanische Verbindung, also z. B. Rohrschellen, Rohrkupplungen, Fittings, Muffen oder dergleichen geschützt sind, hat dies den Vorteil, dass beim Reinigen der Rohre auch diese Teile besser geschützt werden gegen Einwirkungen von Wasser, aggressiven Reinigungsmitteln oder dergleichen und somit auch die mechanische Verbindung länger haltbar gemacht wird und dabei durchaus aus günstigeren Materialien hergestellt werden kann und nicht wie bisher aus Edelstahlteilen, die sehr teuer sind.

Durch die Ausbildung des formbaren Hohlkörpers um die Rohverbindung wird mithin erreicht, dass die Rohrenden, mechanische Rohrverbindung, wie auch die Rohrdichtung sicher geschützt werden, was wiederum die Reinigung von außen erleichtert, insbesondere dann, wenn diese Reinigung mittels aggressiver Medien und/oder mittels Hochdruckreiniger erfolgt, z. B. in Küchen, Kantinen, Krankenhäuser, Lebensmittelproduktionsstätten oder dergleichen.

Wird ein verformbarer Hohlkörper angebracht, ist es auch möglich, vor dem Prozess des Hohlkörpers einen aktiven oder passiven Feuchtigkeitssensor, Feuchtigkeitsindikator oder dergleichen zur Leckageüberwachung mit einzubringen, sodass dieser dann nach der Verformung des Hohlkörpers eng an der Verbindungsstelle beider Rohrenden liegt. Dabei hat dann der verformbare Hohlkörper auch die Funktion, dass er die Leckageüberwachung fixiert, sodass eine Undichtigkeit der Rohrdichtung sicher überwacht bzw. festgestellt werden kann.

Die vorgestellte Lösung ist besonders günstig, weil dabei auf zusätzliche Mittel zur Fixierung des Mittels zur Leckageüberwachung verzichtet werden kann und schließlich hat dabei der verformbare Hohlkörper auch den Vorteil, dass er bei Undichtigkeit der Rohrdichtung, also bei Austritt des Mediums aus dem Rohrinneren nach draußen, verhindern kann, dass das Medium nach außen gelangen kann z. B. herunter tropft und gleichzeitig können die Mittel zur Leckageüberwachung die Undichtigkeit messen und dies entsprechend rechtzeitig anzeigen.

Eine alternative Ausführung, welche insbesondere für Nachrüstung bestehender Rohrverbindungen geeignet ist, besteht daraus, dass die bestehende Rohrverbindung bestehend aus einer aus einem einzelnen oder mehreren Segmenten bestehenden Rohrkupplung oder eines aus einem einzelnen oder mehreren Segmenten bestehenden Fittings für die Verbindung von glattendigen und/oder mit jeweils einem Gewinde versehenen oder mit jeweils mindestens einer umlaufenden Nut versehenen Rohrleitungsenden von außen zusätzlich mit einer Umwicklung (Manschette) versehen wird. Dabei wird dann das Umwicklungsmaterial unter Umständen nach der Umwicklung ebenfalls thermisch verformt und oder selbstverschweißt, sodass es dann eng an der Rohrverbindung anliegt.

Dabei kann es sich um Schrumpfschlauchmaterial handeln, welches als Band- oder Manschettenmaterial ausgebildet ist, welches nach der Umwicklung thermisch verformt wird oder aber auch um selbstverschweißendes bzw. selbstvulkanisierendes Silikonband, Kautschukband, Manschette oder vergleichbares.

In einem solchen Fall hat dann die Umwicklung wie den vorbeschriebene verformbare Hohlkörper die beschriebene abdichtende Wirkung und es kann auch bei der Umwicklung wiederum, wie bereits beschrieben, ein Mittel für eine Leckageüberwachung, also z. B. ein Feuchtigkeitssensor, ein Feuchtigkeitsindikator oder dergleichen, mit verlegt werden, sodass dann über den Schutz der Rohrverbindung und seiner mechanischen Teile wie auch der Dichtung auch eine sichere Fixierung der Mittel der Leckageüberwachung gegeben ist.

Wenn die Rohrverbindung, wie erfindungsgemäß vorgeschlagen, mit dem verformbaren Hohlkörper und/oder der Umwicklung (Manschette) versehen ist, kann dies in einem bestimmten Zeitraum, z. B. in einem bestimmten Jahr, z. B. 2017, in einer ganz bestimmten Farbe erfolgen, z. B. das Umhüllungsmaterial ist in einem bestimmten Jahr schwarz. Wenn zu einem späteren Zeitpunkt, z. B. 2 Jahre später, die entsprechende erfindungsgemäße Rohrverbindung erneuert werden soll, kann dies dadurch geschehen, in dem dann im anderen Jahr, z. B. 2019, sich die entsprechende Farbe des Materials ändern, z. B. statt schwarz dann rot.

Dabei ist es möglich, dass vormals aufgebrachte Material, also dem vormals aufgebrachten Schrumpfschlauch, Umwicklung, etc. vorher abzulösen und dann durch einen neuen zu ersetzen, oder über den bestehenden Schrumpfschlauch, oder über die bereits bestehende Umwicklung wird ein neuer Schrumpfschlauch, eine neue Umwicklung, etc. angebracht.

Durch die entsprechende Farbwahl des Materials kann auch von einer gewissen Entfernung z. B. 5m oder mehr sicher erkannt werden, wann die Rohrverbindung mit dem entsprechenden Material versehen wurde, sodass man dann auch das Alter kennt und entsprechende Schlüsse auf eine Erneuerung, Wartung, etc. schließen kann.

Bei der Anbringung des verformbaren Hohlkörpers, der Umwicklung, der eingelegten Mittel für die Leckageüberwachung ist, wie die gesamte erfindungsgemäße Ausführung deutlich günstiger, als bisherige Mittel zur Leckageüberwachung, z. B. mittels Hüllrohren oder dergleichen.

Die erfindungsgemäße Lösung des thermisch oder chemisch verformbaren Hohlkörpers hat auch den Vorteil, dass ihre Anbringung mit üblichen Werkzeugen erfolgen kann. Schließlich schirmt auch der angebrachte verformte Hohlkörper die Verbindungselemente der Rohrenden sicher gegen äußere Umwelteinflüsse ab.

Zur Überwachung der Funktion des verformten Hohlkörpers gegenüber Alterung, Beschädigung, etc. kann auch vorgesehen werden, dass in den Hohlkörper vor der Verformung, also zwischen Rohrenden bzw. Rohrverbindung einerseits und dem formbaren Hohlkörper ein Drucksensor verlegt wird. Wird dann der Hohlkörper verformt, so kann mittels des Drucksensors der Druck gemessen werden, den der verformbare Hohlkörper auf die innenliegenden Teile ausübt (und umgekehrt).

Verliert der verformte Hohlkörper aufgrund zeitlicher Alterung, äußerer Umwelteinflüsse, etc. irgendwann einmal seine Spannung bzw. Funktion und dehnt sich somit aus, so kann dies durch einen Druckabfall gemessen und angezeigt werden.

Soweit in der vorliegenden Anmeldung beschrieben ist, dass zwischen dem verformbaren Hohlkörper und dem Rohrenden eine Abdichtmasse, Klebemasse, etc. eingesetzt wird, können dies sämtlich bekannte Abdichtmassen, Klebemassen, etc. sein, die für solche Zwecke geeignet sind und die insbesondere dazu führen, dass das Rohrmaterial einerseits, als auch das Material des verformbaren Hohlkörpers nicht beschädigt werden.

Die erfindungsgemäße Rohrverbindung und ihre Lösung ist besonders geeignet für den Anwendungsbereich von Rohrleitungssystemen in Wasserlöschanlagen, zum Beispiel in Sprinkleranlagen, Sprühwasser- oder Löschanlagen, Hydrantenanlagen, Löschanlagen mit und ohne Frostschutz- oder Schaummittelzumischung, Löschanlagen in frostgefährdeten Bereichen, etc. Auch ist die Anwendung der Erfindung bei Rohrverbindungen und Rohren möglich, durch welche z.B. flüssige Lebensmittel, z.B: Mineralwasser, Milch, Bier, Brät, usw. transportiert wird.

Der in der vorliegenden Anmeldung beschriebene Hohlkörper weist erfindungsgemäß auch eine flammenhemmende Eigenschaft auf, ist mit einem Flammschutz versehen, um insoweit auch die Rohrverbindung gegen Flammen zu schützen.

Das Material des Hohlkörpers kann auch selbstverschweißende oder selbstvulkanisierende Eigenschaften aufweisen. Dies ist besonders dann vorteilhaft, wenn der Hohlkörper der Länge nach aufgetrennt wird und dann die offenen Enden des Hohlkörpers übereinander gelegt werden und diese dann zu verschweißen oder durch Vulkanisation wieder zu verbinden. Dies ist besonders bei einer Nachrüstung vorteilhaft, also bei einem Schutz einer fertigen Rohrverbindung, wenn sich der noch unverformte Hohlkörper in seiner geschlossenen Form nicht über die Rohrverbindung schieben lässt, sondern nur nach Auftrennung der Länge nach, sodass dann die offenen, voneinander getrennten Enden über die Rohrverbindung gelegt und miteinander verbunden werden können.

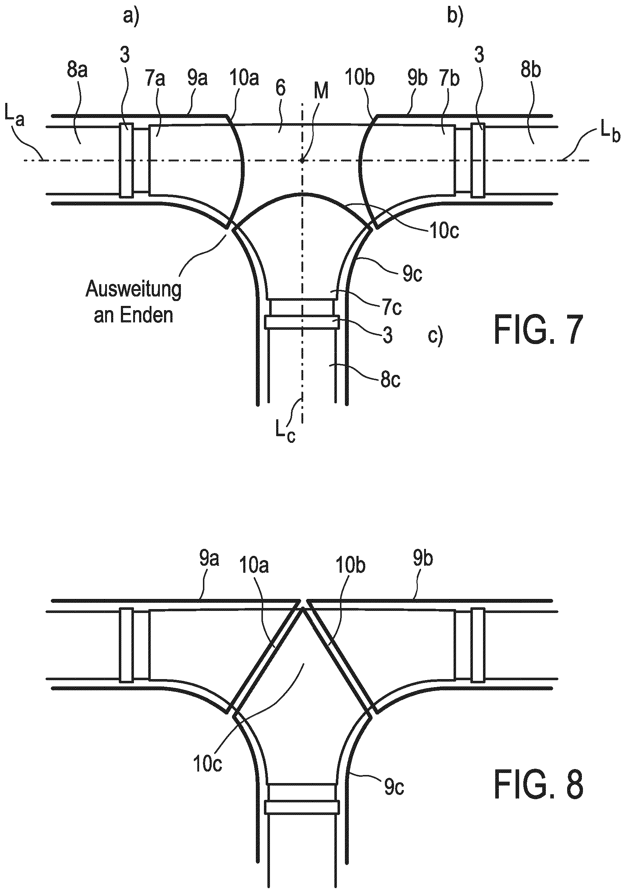

Figur 7 zeigt eine Anwendung der Erfindung für ein T-Stück 6. Dieses T-Stück 6 weist drei Rohrenden 7a, 7b und 7c auf, welche jeweils mit einer Kupplung 3 mit jeweils entsprechenden weiteren dort angeordneten Rohrenden 8a, 8b und 8c verbunden sind, sodass durch die Kupplungen eine feste, wie auch dichte Verbindung der jeweiligen Rohrendenpaare 7a/8a, 7b/8b und 7c/8c entsteht. Die bei der Verbindung der Rohrenden mittels der Kupplungen vorgesehenen Dichtungen sind ausgebildet, aber in der Zeichnung nicht dargestellt.

Wie in Figur 7 zu erkennen, sind über die jeweiligen Rohrendenverbindungen und die Kupplung, die in der vorliegenden Anmeldung beschriebenen Hohlkörper 9a, 9b, 9c gelegt und wenn diese Hohlkörper als Schrumpfschlauch ausgebildet sind, kann durch ein Schrumpfprozess die engumschließende, anschmiegende Abdeckung der jeweiligen Kupplung und der anderen dem ihnen zugeordneten Rohrabschnitten hergestellt werden.

Wie in Figur 7 dargestellt, sind die einzelnen Hohlkörper 9a, 9b und 9c in ihrem T-Stück zugeordneten Ende nicht etwa senkrecht zu ihrer Längsachse La, Lb, Lc abgeschnitten, sondern weisen einen runden Abschnitt 10a, 10b, 10c auf, welcher auch in etwa teilkreisförmig (wie in Figur 7 dargestellt) ausgebildet sein kann. Der Vorteil dieses runden Anschnitts besteht darin, dass beim Schrumpfungsprozess dieser Teil des Hohlkörpers sich möglichst weit zum Mittelpunkt M des T-Stücks hin erstreckt, die einzelnen Hohlkörperabschnitte 9a, 9b, 9c aber separat von den jeweiligen Enden a, b, c auf das T-Stück geschoben werden können. Da der Durchmesser des T-Stücks zur Mitte hin zunimmt, bewirkt der Schrumpfungsprozess auch, dass dort die Hohlkörper, also der Schrumpfschlauch, nach dem Schrumpfungsprozess noch enger anliegt als an den Teilen des T-Stücks bzw. der Rohrenden 8a, 8b, 8c, die einen geringeren Durchmesser aufweisen.

Figur 8 zeigt die vorgestellte Variante eines T-Stücks mit Hohlkörper, wobei die vorderen Enden 10a, 10b, 10c des Hohlkörpers entsprechend so zugeschnitten sind, dass sie sich in ihrem vorderen Bereich, also der Bereich, der über dem T-Stück zur Anlage kommt, entweder exakt berühren oder leicht z.B. um einen oder mehrere cm, überlappen. Dies setzt dann jedoch einen speziellen Zuschnitt des Hohlkörperabschnitts 9c voraus, während die Hohlkörperabschnitte 9a, 9b den gleichen Zuschnitt aufweisen können.

In der Figur 8 sind die Kupplungen nur angedeutet, denn diesbezüglich gilt das gleiche wie in Figur 7.

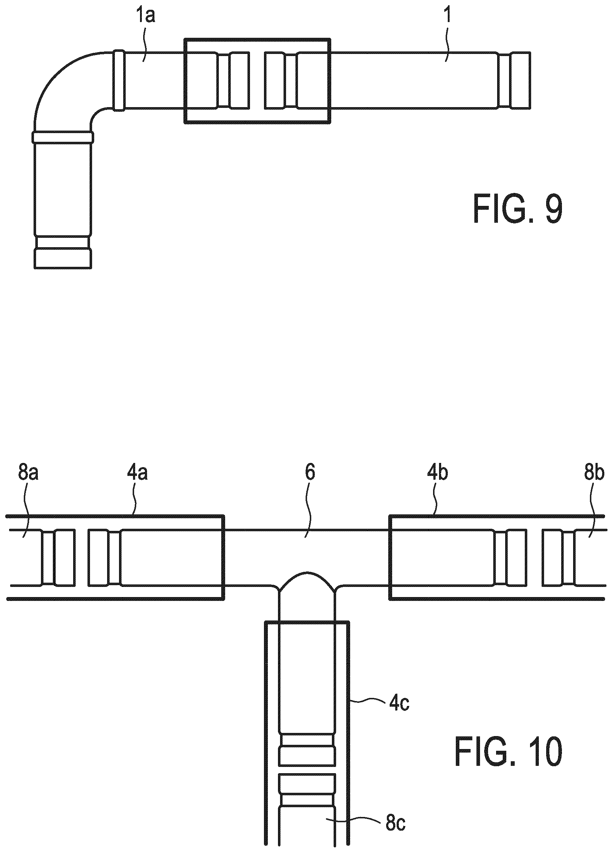

Figur 9 zeigt die Anwendung der Erfindung auf einem geraden Rohrabschnitt 1, der mit einem Rohrbogen 19 gekuppelt wird. In Figur 9 ist Kupplung selbst nicht dargestellt, an den überliegenden Rohrenden gilt jedoch das gleiche, wie in den Figuren 1 bis 6 beschrieben.

Figur 10 zeigt eine weitere Variante eines T-Stücks 6, bei welchem wiederum drei (gleichförmige) Hohlkörper 9a, 9b, 9c auf den jeweiligen Enden a, b, c und deren Kupplungsverbindung (nicht dargestellt) sowie den angrenzenden, mit der Kupplung verbundenen Rohrenden liegen. Bei dieser Art des T-Stücks fallen alle Rohrverbindungen und die Hohlkörper so aus, wie in den Figuren 1 bis 6 beschrieben.

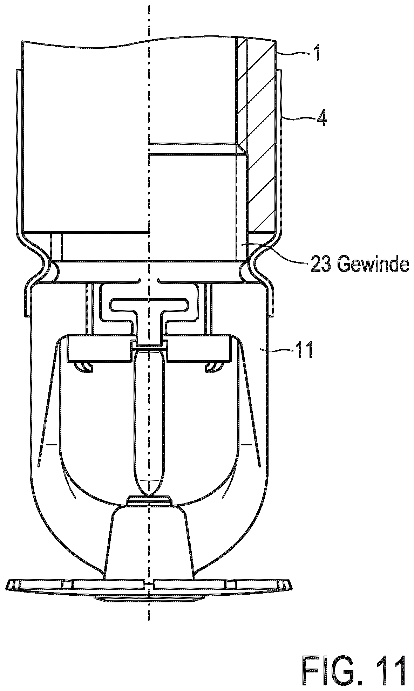

Figur 11 zeigt die Anwendung der Erfindung auf einem Rohr 1 mit einem Sprinklerabgang 11. Der Sprinklerabgang 11 wird regelmäßig auf das Rohr 1 geschraubt oder daran in sonstiger Weise befestigt. Dabei sorgt der Hohlkörper 4 und dessen Umhüllung von Sprinklerabgang sowie des Kupplungsstücks des Sprinklers dafür, dass dieser Teil des Sprinklers bestmöglich abgedichtet ist.

In der Figur 11 ist auch zu erkennen, dass der Sprinkler nicht mit seinem Gewinde 23 nicht vollständig in den Sprinkelabgang und somit das Rohrende 1 eingeschraubt ist. Durch die erfindungsgemäße Anordnung des Schrumpfschlauchs wird aber der gesamte offene Teil des Gewinde 23 vom Schrumpfschlauch verdeckt und somit ein Bereich, der bisher kaum zu reinigen ist aufgrund seiner vielen Entlüftungen, Kanten, Ecken, Nuten, etc. grundsätzlich Unrat, also auch von Stäuben und Reinigungsrückständen, etc. ferngehalten, was insgesamt den Einsatz des Sprinklers, insbesondere seine Tauglichkeit verbessert.

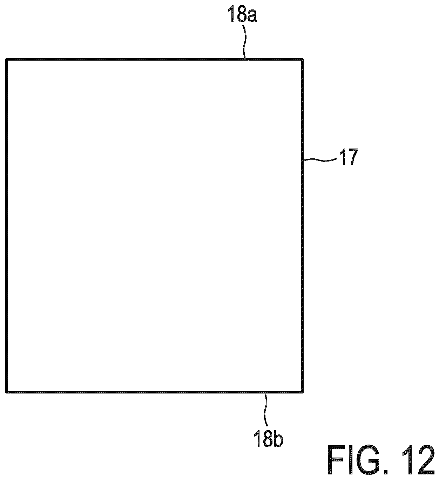

Wenn es nicht möglich ist, den zum Schlauch geformten Hohlkörper über das Rohr zu stülpen, ist es auch möglich, dass der Hohlkörper erst am Rohr bzw. an der Rohrverbindung selbst ausgebildet wird. Dazu kann - wie bereits beschrieben - beispielsweise das Hohlkörpermaterial gemäß Figur 12 zunächst in Form einer z.B. rechteckigen Manschette 17 vorliegen, welche dann um die Rohrverbindung oder das Rohr gelegt oder gewickelt wird. Damit die Manschette um die Rohrenden bzw. Rohrverbindungen bzw. das Rohr liegen bleibt, werden dann die gegen überliegenden Enden 18a und 18b der Manschette so um die Rohrenden, Rohrverbindungen oder Rohre gelegt, dass sie sich möglichst einfach oder mehrfach überlappen und die Rohrenden werden dann fixiert. Dies kann mit Hilfe einer Verschlussschiene bewerkstelligt werden, die beispielsweise nach dem Schrumpfungsprozess und dem Abkühlen der Manschette wieder entfernt werden kann, aber es ist auch möglich, dass die jeweiligen Enden 18a und 18b der Manschette 17 nach Art eines Reißverschlusses ausgebildet sind und wie ein Reißverschluss miteinander verbunden werden. Es ist auch möglich, wenn wenigstens ein Ende 18a und/oder 18b mit einem Kleber versehen ist, dass durch den Kleber die übereinander geschlagenen Enden der Manschette gegeneinander haften bleiben und somit der Schrumpfungsprozess durchgeführt werden kann, ohne dass die Manschettenenden 18a und 18b sich dabei lösen.

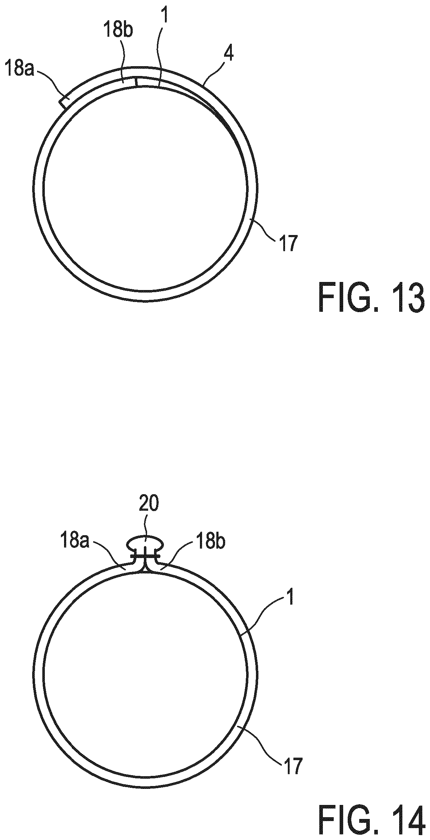

Figur 13 zeigt die Ausbildung des Rohrs 1, welches von einem Hohlkörper 4, der zunächst die Form einer Manschette 17 aufweist, umschlossen ist. Wie zu erkennen, überlappen sich die Enden 18a und 18b der Manschette 17 und wenn wenigstens die Innenseite des Manschettenendes 18a ein Kleber aufgebracht ist, haftet dieser auf der Außenseite des Manschettenendes 18b und fixiert somit die Manschette und erlaubt somit den Schrumpfungsprozess, ohne dass sich dabei die Manschette wieder löst.

Vorzugsweise zur einfachen Anwendung ist aber die gesamte Innenseite der Manschette 17 mit einem entsprechenden Kleber benetzt, sodass es bei der Anbringung der Manschette zu Bildung des Hohlkörpers nicht relevant ist, welches Ende oben und welches unten liegt.

Außerdem sorgt somit der Kleber für die bestmögliche Fixierung der umliegenden Manschette am Rohr 1.

Figur 14 zeigt die Variante zur Ausbildung des Hohlkörpers um das Rohr mittels Manschette, bei welcher die beiden Manschettenenden 18a und 18b mit einer Verschlussschiene 20 (fest) miteinander verbunden werden. Diese Verschlussschiene kann, muss aber nicht unbedingt, nach dem Schrumpfungsprozess entfernt werden.

Soweit in der vorliegenden Anmeldung der Einsatz eines Klebers an der Innenseite des Hohlkörpers der Manschette zum Tragen kommt, sollte es sich hierbei um einen Kleber handeln, welcher für die Anwendung eines Schrumpfschlauchs geeignet ist. Hierbei bietet sich zum Beispiel ein Kleber an, der unter der Bezeichnung Hot melting Adhesive HS-TR-067 von der Firma Hongshang Heat Shrinkable Materials Co., LTd, Shenzhen, China angeboten wird. Das Klebematerial muss dabei nicht vollflächig, sondern kann auch teilflächig auf der Innenseite des Hohlkörpers angeordnet sein. Es ist nämlich dabei zu bedenken, dass sich während des Schrumpfungsprozesses das Material zusammenzieht und dabei Sorge dafür zu tragen ist, wenn man nicht zu viel Klebematerial zwischen dem Hohlkörper (Schrumpfschlauch) und den Rohrenden, Kupplung oder Rohr liegt und sich somit keine "Kleberblasen" auf der Innenseite des Hohlkörpers ausbilden. Das erwähnte "hot-melt adhesive" der Firma Hongshang ist ein geeignetes Material, viele andere Klebematerialien sind ebenfalls einsatzfähig und verfügen über die entsprechende gleiche Eignung.

Wie bereits beschrieben, ist der Einsatz der Erfindung besonders dort geeignet, wo Sprinkleranlagen und deren Rohre, Rohrsysteme eingebaut sind z.B. in Gebäuden oder Betriebsstätten, in denen häufig mit aggressiven Medien und/oder Hochdruckreinigern gereinigt werden muss. Neben den bereits erwähnten Küchen, Kantinen, Krankenhäusern können dies auch Betriebsstätten für die Lebensmittelproduktion sein, z. B. Käsefabriken, Wurstfabriken, Schlachtereien, Milch verarbeitende Betriebe, Getränkehersteller, Schlachtereien, Fleischzerlegungen, etc. alle Produktionsstätten, bei denen es zwingende Vorschrift ist, dass die gesamte Produktionsstätte in wiederkehrenden Abschnitten z. B. einmal am Tag, einmal in der Woche usw. nach strengen Hygienevorschriften gereinigt wird.

In solchen erwähnten Betriebsstätten sind regelmäßig die wasserführenden (Rohranordnungen, Rohre, Rohrenden, Sprinkler und ihre Abgänge etc. von Brandlöschanlagen sowohl an den Seitenwänden als auch unter der Decke angebracht und zur Reinigung des Raumes innerhalb der Betriebsstätte gehört regelmäßig nicht nur die Reinigung der in der Betriebsstätte befindlichen Maschinen und Böden (z. B. Fliesen), sondern auch die Reinigung des gesamten Raumes einschließlich aller Wände- und Deckenbereiche. Das hat zur Folge, dass wiederkehrend z.B. mit Hochdruckreinigern auch die Rohranordnungen, Rohre, Rohrenden damit Kupplungsbereiche der Rohrenden wie auch der Sprinkler mit einem harten Wasserstrahl des Hochdruckreinigers gereinigt werden und die Ausbildung des Hohlkörpers z. B in Form eines Schrumpfschlauchs um die Rohranordnungen, Rohrenden, Kupplungen, Rohre, Sprinklerabgänge etc. werden nicht nur vom Hohlkörper geschützten (abgedeckte) Bereiche vor dem harten Wasserstrahl geschützt, sondern an den Rohranordnungen, Rohrenden, Kupplung, etc. der ausbildeten Hinterschneidungen oder Flächen, die kaum zu reinigen sind, werden durch das Hohlkörpermaterial "geglättet", sodass eine einfachere Reinigung möglich ist bzw. weniger Anlageorte für die Ausbildung von Keimen, Mikroorganismen etc. entstehen.

Es ist auch möglich, dass das Schrumpfschlauchmaterial mit Nanosilber oder dergleichen anzureichern, sodass dadurch an diesen Stellen, wo der Hohlkörper mit dem induzierten Nanosilber ausgebildet ist, sich Mikroorganismen, Keime usw. noch weniger ansiedeln können.

Zur Überwachung, ob unter Umständen bei einem Reinigungsprozess mittels einem chemischem Reiniger, oder besser mittels eines Hochdruckreinigers von außen in den Bereich zwischen Hohlkörper und Rohr, bzw. Rohrverbindung gelangt, ist es auch möglich, dort eine Leckageüberwachung vorzusehen, z. B. einen Feuchtigkeitssensor 21 oder dergleichen anzuordnen. Dieser Feuchtigkeitssensor ist dann drahtlos oder mittels einer Leitung 22 mit einer Meldezentrale verbunden, in der die Signale der Leckage-Überwachung ausgewertet werden und für den Fall, dass sich eine relevante Menge an Feuchtigkeit zwischen Hohlkörper und Rohr- bzw. Rohrverbindung befindet, kann dies angezeigt werden, um somit die bestehende Anordnung zu warten.

Wie dargestellt, beschreibt die Erfindung eine Rohranordnung, welche aus einer Rohrverbindung besteht, bei welcher im Ergebnis die von dem Hohlkörper umhüllte und somit abgedeckte Teil der Rohranordnung bestmöglich gegen Umwelteinflüsse geschützt ist, wie aber auch gegen die Einflüsse von Reinigungsmaterialien und Reinigungsverfahren.

Die Umwelteinflüsse sind dabei insbesondere die Luftfeuchtigkeit, eventuelle aggressive Materialien und Medien, die sich in der Luft enthalten sind, auch Lichteinfall, Reinigungsmaterialien, Chemikalien, als auch jeder Form von Gas aber auch Wasser, welches über eine Reinigungseinrichtung, z.B. auch Hochdruckreiniger auf die Rohranordnung einwirkt.

## Patentansprüche

1. Rohranordnung für eine Brandbekämpfungsanlage, wobei die Brandbekämpfungsanlage zum Beispiel als Sprinkleranlage, Sprühwasser- und/oder Löschanlage, Trockenlöschanlage, Gaslöschanlage, Hydrantenanlage oder dergleichen ausgebildet ist und bevorzugt in einer Kantine, Küche, Krankenhaus, einer Produktionsstätte, insbesondere in einer Lebensmittelproduktionsstätte angeordnet ist, wobei die Rohranordnung mit einer Schutzeinrichtung gegen Umwelteinflüsse versehen ist, und die Rohranordnung besteht aus
eine Rohrverbindung, die zwei Rohrleitungsenden (1, 2) aufweist, die mittels einer mechanischen Verbindung (3) miteinander fixiert sind und bei der die Rohrleitungsenden (1,2), wie auch die mechanische Verbindung (3) mit einem verformbaren Hohlkörper (4) umschlossen sind und der Hohlkörper (4) nach Annahme seiner endgültigen Verformung an den Rohrleitungsenden (1, 2) und der mechanischen Verbindung (3) eng anliegt und diese formschlüssig umschließt und der verformbare Hohlkörper (4) durch eine thermische Behandlung verformbar ist oder chemisch verformbar ist und der verformbare Hohlkörper (4) ein Schrumpfschlauch und/oder durch Anlegen einer Manschette aus Schrumpfschlauchmaterial um die Rohrverbindung gebildet ist.

2. Rohranordnung nach einem der vorhergehenden Ansprüche, **dadurch gekennzeichnet, dass** die mechanische Verbindung (3) aus einer aus einem oder mehreren Segmenten bestehenden Rohrkupplung oder eines aus einem einzelnen oder mehreren Segmenten bestehenden Fittings für die Verbindung von glattendigen oder mit jeweils einem Gewinde versehenen oder mit jeweils mindestens einer Umlaufnut versehenen Rohrleitungsenden gebildet wird.

3. Rohranordnung nach einem der vorhergehenden Ansprüche, **dadurch gekennzeichnet, dass** die Rohranordnung ein T-Stück aufweist, welches drei Rohrleitungsenden (a, b, c) umfasst.

4. Rohranordnung nach einem der vorhergehenden Ansprüche, **dadurch gekennzeichnet, dass** der Hohlkörper (4) eine abdichtende Funktion aufweist und z.B. eine Abdichtmasse bzw. Material enthält.

5. Rohranordnung nach einem der vorherigen Ansprüche, **dadurch gekennzeichnet, dass** der Hohlkörper (4) flammenhemmende Eigenschaften besitzt, z.B. mit einem Flammenschutz versehen ist.

6. Rohranordnung nach einem der vorhergehenden Ansprüche, **dadurch gekennzeichnet, dass** die Rohranordnung mit einem Mittel für eine Leckageüberwachung ausgestattet ist, z.B. einem Feuchtigkeitssensor (21) oder dergleichen.

7. Rohranordnung nach einem der vorhergehenden Ansprüche, **dadurch gekennzeichnet, dass** die Rohrverbindung zusätzlich mit einer Umwicklung versehen ist, welche wenigstens eine oder mehrere der nachstehenden Eigenschaften aufweist:
a) die Umwicklung ist thermisch verformbar oder chemisch verformbar und schrumpft bei der Verformung ein,
b) die Umwicklung weist selbstverschweißende oder selbstvulkanisierende Eigenschaften auf,
c) die Umwicklung enthält eine zusätzliche Abdichtmasse (5),
d) die Umwicklung besitzt flammenhemmende Eigenschaften, ist z. B. mit einem Flammenschutz versehen,
e) die Umwicklung ist mit einem Kleber versehen.

8. Rohranordnung nach einem der vorhergehenden Ansprüche, **dadurch gekennzeichnet, dass** der Hohlkörper wenigstens einseitig mit einem Kleber versehen ist, welcher vorzugsweise vollflächig oder teilflächig, z.B. als Film bzw. Schicht mit einer vordefinierten Dicke aufgetragen ist.

9. Brandbekämpfungsanlage mit wenigstens einer Rohranordnung nach einem der vorhergehenden Ansprüche, wobei die Brandbekämpfungsanlage z.B. als Sprinkleranlage, Sprühwasser- oder Löschanlage, Trockenlöschanlage, Gaslöschanlage oder Hydrantenanlage, bevorzugt für eine Kantine, Küche, ein Krankenhaus oder eine Produktionsstätte, insbesondere eine Lebensmittelproduktionsstätte, ausgebildet ist.

10. Verwendung einer Rohranordnung nach einem der vorhergehenden Ansprüche 1 bis 8 in einem Rohrleitungssystem einer Brandbekämpfungsanlage, z.B. einer Sprinkleranlage, Sprühwasseranlage, Löschanlage, Hydrantenanlage oder dergleichen, wobei die Brandbekämpfungsanlage in einer Produktionsanlage, z. B. Lebensmittelproduktionsstätte, einer Küche, einer Kantine oder einem Krankenhaus angeordnet ist und am Anbringungsort des Rohrleitungssystems mit wiederkehrend chemischen Reinigern oder dergleichen, z.B. Hochdruckreinigern das Rohrleitungssystem von außen gereinigt wird.

11. Verfahren zur Umhüllung einer Rohranordnung nach einem der Ansprüche 1 bis 8, wobei die Verformung des Hohlkörpers durch eine thermische Behandlung erfolgt und die thermische Behandlung derart ausgeführt wird, dass ausreichend Wärme zur thermischen Verformung des Hohlkörpers gleichzeitig von verschiedenen Stellen des Hohlkörpers, vorzugsweise gleichzeitig den gesamten Umfang auf den Hohlkörper einwirkt, um somit einen möglichst homogenen Schrumpfungsprozess zu erzielen.

12. Rohranordnung nach einem der vorhergehenden Ansprüche 1 bis 8, **dadurch gekennzeichnet, dass** der Hohlkörper (4) durch Anlegen einer Manschette (17) um die Rohrverbindung (1, 2, 3) gebildet wird.

## Claims

1. Pipe arrangement for a firefighting installation, wherein the firefighting installation is, for example, formed as a sprinkler installation, a spray water and/or an extinguishing installation, a dry extinguishing installation, a gas extinguishing installation, a hydrant installation or the like, and is preferably arranged in a canteen, a kitchen, a hospital, a production facility, in particular a food production facility, wherein the pipe arrangement is provided with a protective device against environmental influences, and the pipe arrangement comprises:
a pipe joint which includes two pipe ends (1, 2) which are fixed together by means of a mechanical joint (3), wherein the pipe ends (1, 2) and also the mechanical joint (3) are enclosed with a deformable hollow body (4) and, after assuming its definitive deformation, the deformable hollow body (4) bears snugly against the pipe ends (1, 2) and the mechanical joint (3) and surrounds them in positively locking relationship, wherein the deformable hollow body (4) is deformable by a thermal treatment or is chemically deformable, wherein the deformable hollow body (4) is a shrink tube and/or is formed by wrapping a sleeve made of shrink tube material around the pipe joint.

2. Pipe arrangement according to the preceding claim, **characterised in that** the mechanicaljoint (3) is formed from a pipe coupling comprising one or more segments or a fitting comprising a single segment or a plurality of segments for the connection of pipe ends which are smooth-ended or which are respectively provided with a thread or which are respectively provided with at least one peripheral groove.

3. Pipe arrangement according to any of the preceding claims, **characterised in that** the pipe arrangement comprises a T-piece which includes three pipe ends (a, b, c).

4. Pipe arrangement according to any of the preceding claims, **characterised in that** the hollow body (4) has a sealing function and contains, for example, a sealing mass or material.

5. Pipe arrangement according to any of the preceding claims, **characterised in that** the hollow body (4) has flame-inhibiting properties, for example it is provided with a flame protection.

6. Pipe arrangement according to any of the preceding claims, **characterised in that** the pipe arrangement is equipped with a means for leakage monitoring, for example a moisture sensor (21) or the like.

7. Pipe arrangement according to any of the preceding claims, **characterised in that** the pipe joint is additionally provided with a wrapping which has at least one or more of the following properties:
a) the wrapping is thermally deformable or chemically deformable and shrinks upon deformation,
b) the wrapping has self-welding or self-vulcanizing properties,
c) the wrapping includes an additional sealing mass (5),
d) the wrapping has flame-inhibiting properties, for example it is provided with a flame protection, and
e) the wrapping is provided with an adhesive.

8. Pipe arrangement according to any of the preceding claims, **characterised in that** the hollow body is provided at least at one side with an adhesive which is preferably provided over the full surface area or part of the surface area, for example in the form of a film or layer of a predefined thickness.

9. Firefighting installation with at least one pipe arrangement according to any of the preceding claims, wherein the firefighting installation is, for example, formed as a sprinkler installation, a spray water or extinguishing installation, a dry extinguishing installation, a gas extinguishing installation or a hydrant installation, preferably for a canteen, a kitchen, a hospital or a production facility, in particular a food production facility.

10. Use of a pipe arrangement according to any of preceding claims 1 to 8 in a pipework system of a firefighting installation, for example a sprinkler installation, a spray water installation, an extinguishing installation, a hydrant installation or the like, wherein the firefighting installation is arranged in a production facility, for example a food production facility, a kitchen, a canteen or a hospital, and the pipework system is cleaned from the outside at the location of fitment of the pipework system with repetitive chemical cleaners or the like, for example high pressure cleaners.

11. Method of encasing a pipe arrangement according to any of preceding claims 1 to 8, wherein deformation of the hollow body is effected by a thermal treatment and the thermal treatment is carried out in such a way that sufficient heat for thermal deformation of the hollow body acts simultaneously on the hollow body from various locations of the hollow body, preferably simultaneously acting thereon over the entire periphery, in order thereby to achieve a shrinkage process which is as homogeneous as possible.

12. Pipe joint according to any of preceding claims 1 to 8, **characterised in that** the hollow body (4) is formed by wrapping a sleeve (17) around the pipe joint (1, 2, 3).

## Revendications

1. Ensemble de tuyaux pour une installation de lutte contre l'incendie, dans lequel l'installation de lutte contre l'incendie est réalisée par exemple en tant qu'installation de gicleurs, installation à eau de pulvérisation et/ou d'extinction, installation d'extinction à sec, installation d'extinction au gaz, installation à prise d'incendie ou similaire et est disposée de manière préférée dans une cantine, une cuisine, un hôpital, un atelier de production, en particulier dans un atelier de production de produits alimentaires, dans lequel l'ensemble de tuyaux est pourvu d'un dispositif de protection contre les influences extérieures, et l'ensemble de tuyaux est constitué
d'un raccord de tuyau, qui présente deux extrémités de canalisation (1, 2), qui sont fixées l'une à l'autre au moyen d'un raccord mécanique (3) et pour laquelle les extrémités de canalisation (1, 2) tout comme le raccord mécanique (3) sont entourées d'un corps creux (4) déformable et le corps creux (4) repose étroitement contre les extrémités de canalisation (1, 2) et le raccord mécanique (3) après avoir adopté sa déformation finale et entoure ceux-ci par complémentarité de forme,
et le corps creux (4) déformable peut être déformé par un traitement thermique ou peut être déformé par voie chimique et le corps creux (4) déformable est formé par un tuyau rétractable et/ou en posant un manchon en matériau de tuyau flexible rétractable autour du raccord de tuyau.

2. Ensemble de tuyaux selon la revendication précédente, **caractérisé en ce que** le raccord mécanique (3) est formé à partir d'un couplage de tuyau constitué d'un ou de plusieurs segments ou d'un raccord à collerette constitué d'un unique ou de plusieurs segments pour le raccordement d'extrémités de canalisation à extrémité lisse ou pourvues de respectivement un filetage ou pourvues de respectivement au moins une rainure périphérique.

3. Ensemble de tuyaux selon l'une quelconque des revendications précédentes, **caractérisé en ce que** l'ensemble de tuyaux présente une pièce en T, laquelle comprend trois extrémités de canalisation (a, b, c).

4. Ensemble de tuyaux selon l'une quelconque des revendications précédentes, **caractérisé en ce que** le corps creux (4) présente une fonction d'étanchéité et contient par exemple une masse d'étanchéité ou un matériau.

5. Ensemble de tuyaux selon l'une quelconque des revendications précédentes, **caractérisé en ce que** le corps creux (4) possède des propriétés ignifuges, par exemple est pourvu d'une protection pare-flamme.

6. Ensemble de tuyaux selon l'une quelconque des revendications précédentes, **caractérisé en ce que** l'ensemble de tuyaux est équipé d'un moyen pour une surveillance de fuites, par exemple d'un capteur d'humidité (21) ou similaire.

7. Ensemble de tuyaux selon l'une quelconque des revendications précédentes, **caractérisé en ce que** le raccord de tuyau est pourvu en supplément d'un enroulement, lequel présente au moins une ou plusieurs des propriétés suivantes :
a) l'enroulement peut être déformé thermiquement ou peut être déformé par voie chimique et se rétracte lors de la déformation,
b) l'enroulement présente des propriétés de soudage automatique ou de vulcanisation automatique,
c) l'enroulement contient une masse d'étanchéité (5) supplémentaire,
d) l'enroulement possède des propriétés ignifuges, est pourvu par exemple d'une protection pare-flamme,
e) l'enroulement est pourvu d'une colle.

8. Ensemble de tuyaux selon l'une quelconque des revendications précédentes, **caractérisé en ce que** le corps creux est pourvu au moins d'un côté d'une colle, laquelle est appliquée de préférence sur la totalité de la surface ou sur une surface partielle, par exemple en tant que film ou couche, avec une épaisseur prédéfinie.

9. Installation de lutte contre l'incendie avec au moins un ensemble de tuyaux selon l'une quelconque des revendications précédentes, dans laquelle l'installation de lutte contre l'incendie est réalisée par exemple en tant qu'installation de gicleurs, installation à eau de pulvérisation ou d'extinction, installation d'extinction à sec, installation d'extinction au gaz ou installation de prise d'eau, de manière préférée pour une cantine, une cuisine, un hôpital ou un atelier de production, en particulier un atelier de production de produits alimentaires.

10. Utilisation d'un ensemble de tuyaux selon l'une quelconque des revendications 1 à 8 dans un système de canalisations d'une installation de lutte contre l'incendie, par exemple d'une installation de gicleurs, d'une installation à eau de pulvérisation, d'une installation d'extinction, d'une installation de prise d'eau ou similaire, dans laquelle l'installation de lutte contre l'incendie est disposée dans une installation de production, par exemple un atelier de production de produits alimentaires, une cuisine, une cantine ou un hôpital et le système de canalisations est nettoyé depuis l'extérieur avec des nettoyants chimiques ou similaires récurrents, par exemple des nettoyeurs haute pression sur le site de montage du système de canalisations.

11. Procédé de gainage d'un ensemble de tuyaux selon l'une quelconque des revendications 1 à 8, dans lequel la déformation du corps creux est effectuée par un traitement thermique et le traitement thermique est réalisé de telle manière qu'une quantité suffisante de chaleur agit sur le corps creux pour la déformation thermique du corps creux simultanément de différents endroits du corps creux, de préférence simultanément de la totalité de la périphérie pour ainsi obtenir un processus de rétractation dans la mesure du possible homogène.

12. Ensemble de tuyaux selon l'une quelconque des revendications précédentes 1 à 8, **caractérisé en ce que** le corps creux (4) est formé en posant un manchon (17) autour du raccord de tuyau (1, 2, 3).
